# EUROPÄISCHE PATENTSCHRIFT

(11) **EP 4 440 860 B1**
(45) Veröffentlichungstag und Bekanntmachung des Hinweises auf die Patenterteilung: **09.09.2026**
(21) Anmeldenummer: 22818764.7
(22) Anmeldetag: 21.11.2022
(51) Int. Cl.: B60K 1/00, B60K 11/02

(54) **VERFAHREN ZUM STEUERN EINES KÜHLSYSTEMS, STEUEREINRICHTUNG UND KRAFTFAHRZEUG**
METHOD FOR CONTROLLING A COOLING SYSTEM, CONTROL DEVICE, AND MOTOR VEHICLE
PROCÉDÉ DE COMMANDE D'UN SYSTÈME DE REFROIDISSEMENT, DISPOSITIF DE COMMANDE ET VÉHICULE AUTOMOBILE

(30) Priorität: 01.12.2021 DE 102021131539
(43) Veröffentlichungstag der Anmeldung: 09.10.2024
(73) Patentinhaber: Bayerische Motoren Werke Aktiengesellschaft, 80809 München (DE)
(72) Erfinder: KUEPPER, Tilman, 80336 München (DE)
(86) Internationale Anmeldenummer: PCT/EP2022/082547
(87) Internationale Veröffentlichungsnummer: WO 2023/099251

(56) Entgegenhaltungen:
- DE-A1- 102018 116 737
- DE-A1- 102020 129 589
- US-A1- 2018 117 986
- US-A1- 2020 109 657
- US-A1- 2020 276 882

## Beschreibung

Die Erfindung betrifft ein Verfahren zum Steuern eines Kühlsystems bzw. von Kühlkreisläufen mit einem Motorkühlkreislauf und einem Batteriekühlkreislauf, wobei von einer Einbindung eines ersten Kühlers in den Motorkühlkreislauf zu einer Einbindung des ersten Kühlers in den Batteriekühlkreislauf umgeschaltet wird. Darüber hinaus betrifft die Erfindung eine Steuereinrichtung zum Ausführen solch eines Verfahrens und ein Kraftfahrzeug mit solch einer Steuereinrichtung.

Beim parallelen Betrieb eines Motorkühlkreislaufs, in dem ein Antriebsmotor eines elektrisch angetriebenen Kraftfahrzeugs von Kühlmittel gekühlt wird, und eines Batteriekühlkreislaufs, in dem eine Antriebsbatterie gekühlt wird, herrschen üblicherweise zwei unterschiedliche Temperaturniveaus vor. Der Batteriekühlkreislauf erfordert niedrigere Temperaturen von beispielsweise 35°C, wohingegen sich das Kühlmittel im Motorkühlkreislauf auf einem höheren Temperaturniveau von beispielsweise 70°C befindet.

Wenn nun, aufgrund einer betriebsbedingten Veränderung der Verschaltung von Komponenten, Kühlmittel aus dem Motorkühlkreislauf in den Batteriekühlkreislauf gelangt, dann ist das in den Batteriekühlkreislauf einströmende Kühlmittel eventuell zunächst zu heiß für temperatursensitive Komponenten, wie die Antriebsbatterie.

Zum weiteren Stand der Technik wird auf US 2020/109657 A1, DE 10 2018 116737 A1, US 2018/117986 A1, DE 10 2020 129589 A1 und US 2020/276882 A1 verwiesen.

Es ist daher eine Aufgabe der vorliegenden Erfindung die vorstehend genannten Nachteile zumindest teilweise zu beseitigen. Diese Aufgabe wird durch ein Verfahren gemäß Anspruch 1, eine Steuereinrichtung gemäß Anspruch 8 sowie ein Kraftfahrzeug gemäß Anspruch 9 gelöst. Vorteilhafte Weiterbildungen der Erfindung sind Gegenstand der abhängigen Ansprüche.

Gemäß einem Ausführungsbeispiel der Erfindung wird ein Verfahren zum Steuern eines Kühlsystems bereitgestellt. Das Kühlsystem hat einen Motorkühlkreislauf, in dem ein Antriebsmotor und eine Motorkreis-Pumpe kreislaufartig durchströmt werden, sowie einen Batteriekühlkreislauf, in dem eine Batteriekreis-Pumpe und eine Antriebsbatterie und/oder eine zur Antriebsbatterie parallele Batterie-Bypassleitung kreislaufartig durchströmt werden. In dem Verfahren ist in einem ersten Betriebszustand ein erster Kühler über eine Schaltvorrichtung in den Motorkühlkreislauf eingebunden. Ferner werden in dem ersten Betriebszustand der Motorkühlkreislauf und der Batteriekühlkreislauf fluidisch voneinander getrennt von Kühlmittel durchströmt. Anschließend wird durch Betätigung der Schaltvorrichtung in einen zweiten Betriebszustand geschaltet, in welchem von der Einbindung des ersten Kühlers in den Motorkühlkreislauf (5) zu einer Einbindung des ersten Kühlers in den Batteriekühlkreislauf gewechselt wird und in dem der Batteriekühlkreislauf, fluidisch vom Motorkühlkreislauf (5) getrennt, von Kühlmittel durchströmt wird. Darüber hinaus wird zusammen mit der Betätigung der Schaltvorrichtung eine Förderleistung der Batteriekreis-Pumpe reduziert und das Kühlmittel an der Antriebsbatterie vorbei durch die Batterie-Bypassleitung geführt. Dies hat den Vorteil, dass der Erfinder herausgefunden hat, dass durch die Verlangsamung der Fördergeschwindigkeit eine deutlich schnellere Homogenisierung, d.h. eine Angleichung des höheren Temperaturniveaus des aus dem Motorkühlkreislauf in den Batteriekühlkreislauf einströmenden Kühlmittels an die Kühlmitteltemperatur des zuvor im Batteriekühlkreislaufs befindlichen Kühlmittels erfolgt. Dadurch kann verhindert werden, dass zu heißes Kühlmittel durch die Antriebsbatterie strömt. Das Problem könnte zwar auch durch eine temporäre Umgehung der Antriebsbatterie über die Batterie-Bypassleitung erfolgen, jedoch kann durch gleichzeitige Reduzierung der Förderleistung eine schnellere Angleichung erzielt werden und somit eine schnellere Wiederaufnahme der Kühlfunktion der Antriebsbatterie bewirkt werden. Durch die Reduzierung der Förderleistung und die damit verbundene lange Verweilzeit des heißen Kühlmittels im ersten Kühler wird die Kühlmitteltemperatur des im ersten Kühler befindlichen Kühlmittels an eine Umgebungstemperatur oder eine Ziel-Vorlauftemperatur für die Antriebsbatterie angeglichen. Außerdem kann ein Einströmen von zu heißem Kühlmittel aus dem Motorkühlkreislauf in den Batteriekühlkreislauf dazu führen, dass Fehlermeldungen ausgelöst werden, weil die Kühlmitteltemperatur zu heiß für ein Durchströmen der Antriebsbatterie wäre. Durch die erfindungsgemäße Reduzierung der Förderleistung können solche Fehlermeldungen verhindert werden oder es kann eventuell auf Diagnosefunktionen zur Vermeidung von Fehlermeldungen verzichtet werden.

Insbesondere wird dabei die Förderleistung um zumindest 50% gegenüber der bis dahin vorherrschenden Förderleistung reduziert.

Der erste Kühler ist ein erster Umgebungsluftkühler. Der erste Umgebungsluftkühler ist ein Wärmeüberträger, der von Kühlmittel durchströmbar ist und von Umgebungsluft (d.h. eine das Fahrzeug umgebende Luft) um- und/oder durchströmbar ist, wobei das Kühlmittel von der Umgebungsluft gekühlt wird.

Bei dem Chiller bzw. Kühlmittel-Kältemittel-Kühler handelt es sich um einen Wärmeüberträger, der von Kühlmittel und gleichzeitig von Kältemittel eines nicht dargestellten Kältekreislaufs durchströmbar ist, wobei das Kühlmittel und das Kältemittel fluidisch voneinander getrennt sind und sich in Wärmetausch miteinander befinden.

Gemäß einem weiteren Ausführungsbeispiel der Erfindung wird die Förderleistung der Batteriekreis-Pumpe nach der Reduzierung mit abnehmender Kühlmitteltemperatur oder ab Unterschreitung eines Kühltemperatur-Schwellenwertes an einer Eingangsseite der Batterie-Bypassleitung wieder erhöht. Sobald im Batteriekühlkreislauf das Kühlmittel stromaufwärts der Antriebsbatterie wieder ein Temperaturniveau erreicht hat, bei dem das Kühlmittel wieder durch die Antriebsbatterie geführt werden kann, wird die Förderleistung zur Ausschöpfung der vollen Kühlleistung wieder erhöht.

Gemäß einem weiteren Ausführungsbeispiel der Erfindung wird nach der Reduzierung der Förderleistung der Batteriekreis-Pumpe mit Unterschreitung eines Kühltemperatur-Schwellenwertes des Kühlmittels an einer Eingangsseite der Batterie-Bypassleitung eine Durchströmung der Antriebsbatterie freigegeben.

Gemäß einem weiteren Ausführungsbeispiel der Erfindung wird nach der Betätigung der Schaltvorrichtung eine Förderrichtung der Batteriekreis-Pumpe temporär umgekehrt, bis ein Kühlmittel, welches sich zum Umschaltzeitpunkt zwischen dem ersten Kühler und der Schaltvorrichtung befand, durch den ersten Kühler gefördert ist. Dadurch könnte das heiße Kühlmittel, welches zum Umschaltzeitpunkt den ersten Kühler bereits passiert hat, nochmal zurück zum ersten Kühler geführt werden, dadurch abgekühlt werden und erst nach der Abkühlung in den Batteriekühlkreislauf eingeleitet werden.

Gemäß einem weiteren Ausführungsbeispiel der Erfindung ist in dem Batteriekühlkreislauf ferner ein Chiller angeordnet.

Gemäß einem weiteren Ausführungsbeispiel der Erfindung ist in dem Motorkühlkreislauf ferner ein zweiter Kühler angeordnet.

Bei dem zweiten Kühler handelt es sich um einen zweiten Umgebungsluftkühler, der in Form eines Wärmeüberträgers von Kühlmittel durchströmbar ist und von Umgebungsluft (d.h. eine das Fahrzeug umgebende Luft) um- und/oder durchströmbar ist, wobei das Kühlmittel von der Umgebungsluft gekühlt wird.

Gemäß einem weiteren Ausführungsbeispiel der Erfindung handelt es sich bei der Schaltvorrichtung um ein 6/2-Wege-Ventil.

Darüber hinaus stellt die Erfindung eine Steuereinrichtung bereit, welche angepasst ist, das vorstehend beschriebene Verfahren auszuführen. Dazu ist eine Steuersoftware in der Steuereinrichtung hinterlegt, welche dieses Verfahren ausführt.

Ferner stellt die Erfindung ein Kraftfahrzeug mit solch einer Steuereinrichtung bereit.

Nachfolgend wird ein bevorzugtes Ausführungsbeispiel der vorliegenden Erfindung unter Bezugnahme auf die beigefügten Zeichnungen beschrieben. In diesen Zeichnungen ist Folgendes dargestellt:
- Figur 1a: zeigt stark schematisch ein Kühlsystem gemäß einem Ausführungsbeispiel der vorliegenden Erfindung in einem ersten Betriebszustand;
- Figur 1b: zeigt stark schematisch das Kühlsystem gemäß dem Ausführungsbeispiel der vorliegenden Erfindung in einem zweiten Betriebszustand;
- Figur 2: zeigt schematisch etwas detaillierter das Kühlsystem gemäß dem Ausführungsbeispiel der vorliegenden Erfindung im ersten Betriebszustand, und
- Figur 3: zeigt schematisch das Kühlsystem aus Figur 2 im zweiten Betriebszustand.

Das erfindungsgemäße Kühlsystem ist in ein elektrisch angetriebenes Kraftfahrzeug eingebaut, welches zumindest zeitweise rein elektrisch angetrieben wird.

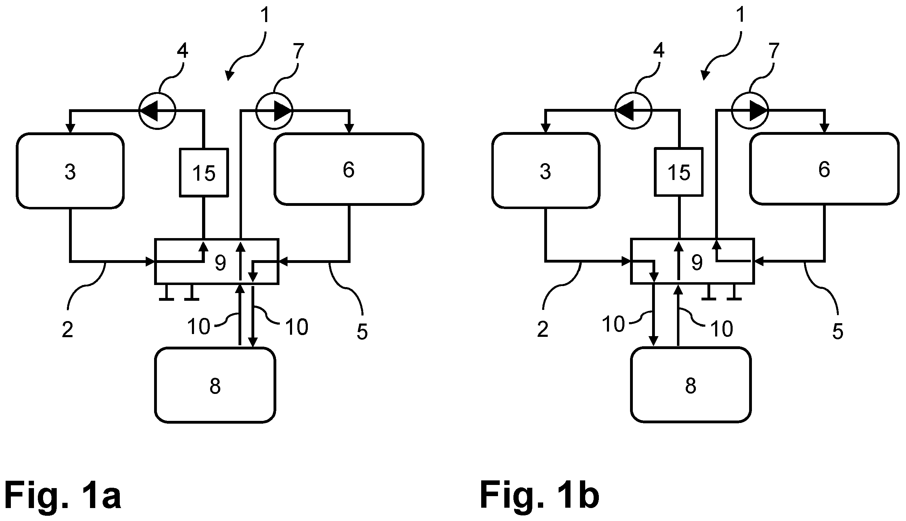

Figur 1a zeigt stark schematisch ein Kühlsystem 1 gemäß einem Ausführungsbeispiel der vorliegenden Erfindung in einem ersten Betriebszustand. Das Kühlsystem 1 umfasst einen Batteriekühlkreislauf 2, in dem eine Antriebsbatterie 3 und eine Batteriekreis-Pumpe 4 ringartig von Kühlmittel durchströmt werden. Ferner umfasst das Kühlsystem 1 einen Motorkühlkreislauf 5, in dem eine Antriebsmaschine 6 und eine Motorkreis-Pumpe 7 ringartig von Kühlmittel durchströmt werden.

Die Antriebsbatterie 3 weist eine Vielzahl von elektrochemischen Batteriezellen auf, die miteinander elektrisch verbunden und wiederaufladbar sind. Die Batteriezellen speichern elektrische Energie und versorgen damit zumindest die Antriebsmaschine 6. Die Antriebsmaschine 6 umfasst einen oder mehrere Elektromotoren zum Antrieb des Kraftfahrzeugs.

Darüber hinaus weist das Kühlsystem 1 einen ersten Kühler 8 auf. Beim diesem kann es sich um einen Umgebungsluftkühler handeln. Der erste Kühler 8 hat einen einzigen Kühlmitteleingang und einen einzigen Kühlmittelausgang.

Das Kühlsystem 1 weist darüber hinaus eine Schaltvorrichtung 9, insbesondere ein Schaltventil oder mehrere Schaltventile, auf, mit dem der erste Kühler 8 wahlweise in den Batteriekühlkreislauf 2 oder in den Motorkühlkreislauf 5 einbindbar ist.

Im ersten Betriebszustand ist die Schaltvorrichtung 9 so geschaltet, dass der erste Kühler 8 über Zu- und Ableitungen 10 seriell in den ringartig durchströmten Motorkühlkreislauf 5 verschaltet ist.

Figur 1b zeigt stark schematisch das Kühlsystem 1 aus Figur 1a in einem zweiten Betriebszustand. In diesem zweiten Betriebszustand ist die Schaltvorrichtung 9 so geschaltet, dass der erste Kühler 8 über die Zu- und Ableitungen 10 seriell in den ringartig durchströmten Batteriekühlkreislauf 2 verschaltet ist. Dazu wird die Schaltvorrichtung 9 von einer Steuereinrichtung (nicht dargestellt) betätigt und von einer ersten Schaltstellung in eine zweite Schaltstellung bewegt.

Der Batteriekühlkreislauf 2 und der Motorkühlkreislauf 5 befinden sich im Betrieb des Kühlsystems 1 üblicherweise auf unterschiedlichen Temperaturniveaus, wobei das Temperaturniveau des Motorkühlkreislaufs 5 höher ist. Beispielsweise hat das Kühlmittel im Batteriekühlkreislauf eine Temperatur von 35°C und das Kühlmittel im Motorkühlkreislauf eine Temperatur von 70°C.

Wenn der Umschaltvorgang vom ersten zum zweiten Betriebszustand mittels der Schaltvorrichtung 9 durchgeführt wird, dann befindet sich zum Umschaltzeitpunkt in den Zu- und Ableitungen 10 sowie im Kühler 8 immer noch das Kühlmittel mit dem höheren Temperaturniveau (z.B. 70°C). Dies würde, nach dem Umschaltvorgang und der damit verbundenen Einbindung des ersten Kühlers 8 in den Batteriekühlkreislauf, der Antriebsbatterie 3 zugeführt werden. Die Antriebsbatterie 3 ist jedoch temperatursensitiv, weshalb eine Durchströmung der Antriebsbatterie 3 mit solch heißem Kühlmittel zu vermeiden ist.

Daher wird erfindungsgemäß zusammen bzw. im Wesentlichen gleichzeitig, insbesondere gleichzeitig, mit dem Umschaltvorgang der Schaltvorrichtung 9 eine Förderleistung der Batteriekreis-Pumpe 4 reduziert. Dies führt zu einer langsameren Strömungsgeschwindigkeit des Kühlmittels im Batteriekühlkreislauf 2 und zu einer besseren Homogenisierung der Temperatur, wodurch schneller eine Temperatursenkung erreichbar ist.

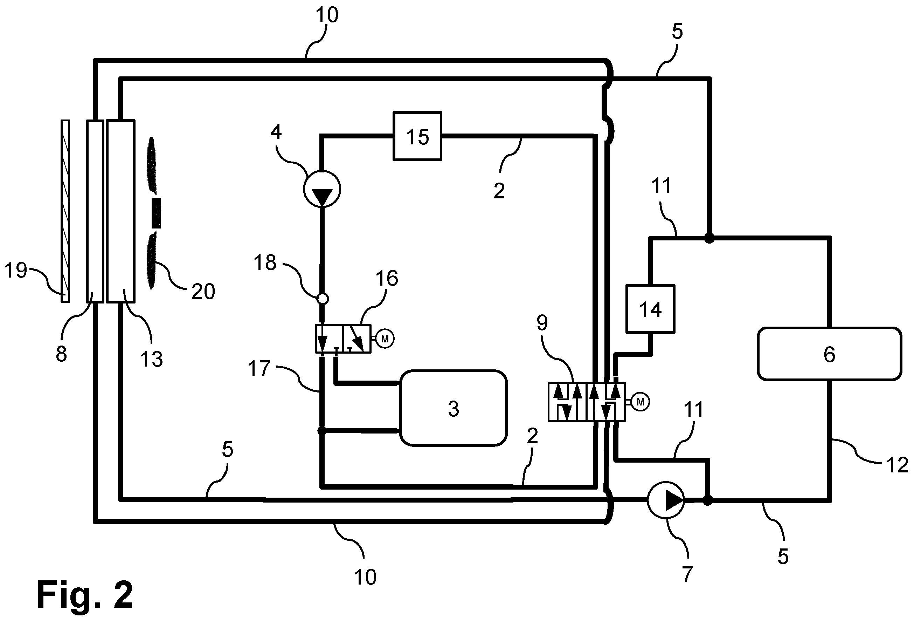

Figur 2 zeigt schematisch etwas detaillierter das Kühlsystem 1 gemäß dem Ausführungsbeispiel der vorliegenden Erfindung im ersten Betriebszustand. Im ersten Betriebszustand befindet sich die Schaltvorrichtung 9 in ihrer ersten Schaltstellung, so dass der Motorkühlkreislauf 5 ausgebildet wird, in dem die Motorkreis-Pumpe 7, eine Parallelschaltung aus einem Kondensatorstrang 11 und einem Motorstrang 12 sowie, seriell dazu, einem zweiten Kühler 13 seriell angeordnet und ringartig von Kühlmittel durchströmbar sind. Das Kühlmittel ist ein mit Additiven versetztes Wasser, wie beispielsweise ein Wasser-Glykol-Gemisch. Der Motorstrang 12 weist die Antriebsmaschine 6 auf. Der Kondensatorstrang 11 ist im ersten Betriebszustand eine Serienschaltung aus Schaltvorrichtung 9, Zu-/Ableitung 10, zweitem Kühler 13, Zu-/Ableitung 10 und einem wassergekühlten Kondensator 14. Letzterer ist ein Kühlmittel-Kältemittel-Kondensator, bei dem es sich um einen Wärmeüberträger handelt, der von Kühlmittel und gleichzeitig von Kältemittel eines nicht dargestellten Kältekreislaufs durchströmbar ist, wobei das Kühlmittel und das Kältemittel fluidisch voneinander getrennt sind und sich in Wärmetausch miteinander befinden.

Gleichzeitig zum Motorkühlkreislauf 5 wird der Batteriekühlkreislauf 2 ausgebildet. In diesem zirkuliert ringartig, getrennt vom Motorkühlkreislauf 5 Kühlmittel durch eine Serienschaltung eines Chillers 15, die Batteriekreis-Pumpe 4, ein Batterieventil 16, der Antriebsbatterie 3 mit zur Antriebsbatterie 3 parallel geschalteter Batterie-Bypassleitung 17 und der Schaltvorrichtung 9. Die Batterie-Bypassleitung 17 umgeht ausschließlich die Antriebsbatterie 3. Mit dem Batterieventil 16 kann der Kühlmittelstrom im Batteriekühlkreislauf 2 wahlweise durch die Antriebsbatterie 3 und/oder durch die Batterie-Bypassleitung 17 geführt werden.

An einer Eingangsseite der Batterie-Bypassleitung 17 (insbesondere stromaufwärts der Batterie-Bypassleitung 17, stromaufwärts der Antriebsbatterie 3 und stromabwärts der Batteriekreis-Pumpe 4) ist ein Temperatursensor 18 zum Messen einer Kühlmitteltemperatur vorgesehen. Mit diesem Temperatursensor 18 kann überwacht werden, mit welcher Temperatur des Kühlmittel in die Antriebsbatterie 3 einströmt oder, im Falle der Durchströmung ausschließlich der Batterie-Bypassleitung 17, einströmen würde.

Dem ersten Kühler 8 und dem zweiten Kühler 13 sind in bekannter Weise eine Luftklappensteuerung 19 und ein Gebläse 20 zugeordnet.

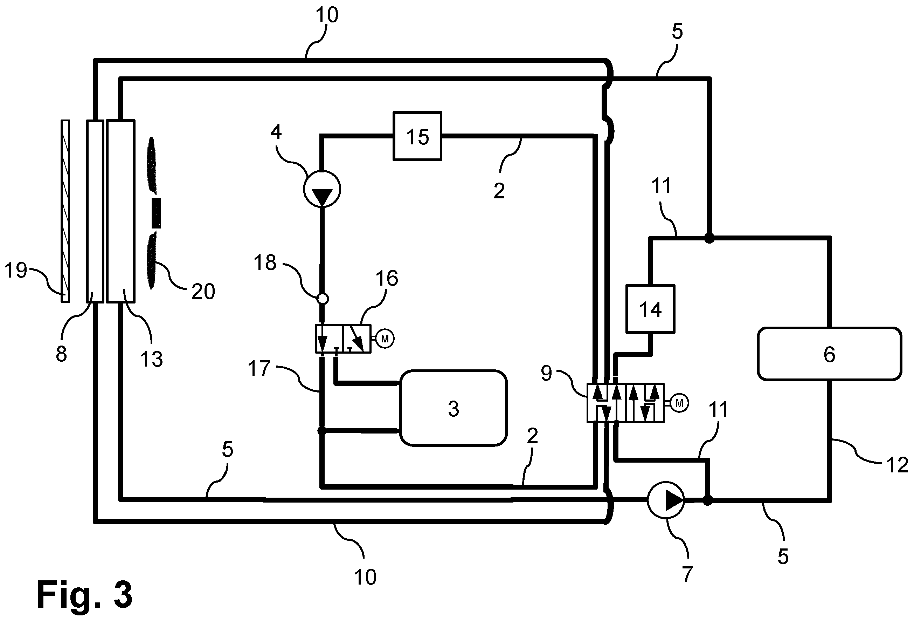

Figur 3 zeigt schematisch das Kühlsystem aus Figur 2 im zweiten Betriebszustand. Um vom ersten in den zweiten Betriebszustand zu wechseln, wird von einer (nicht dargestellten) Steuereinheit die Schaltvorrichtung 9 von ihrer ersten in ihre zweite Schaltstellung bewegt. Außerdem wird das Batterieventil 16 zusammen mit der Schaltvorrichtung 9 in eine Schaltstellung gebracht, in der das Kühlmittel durch die Batterie-Bypassleitung 17 geführt wird und somit die Antriebsbatterie 3 umgeht.

Durch die Umschaltung der Schaltvorrichtung 9 ist der erste Kühler 8 nicht mehr in den Motorkühlkreislauf 5, sondern stattdessen in den Batteriekühlkreislauf 2 eingebunden. Genauer wird somit der Kondensatorstrang 11 des Motorkühlkreislaufs 5 durch eine Serienschaltung aus Schaltvorrichtung 9 und wassergekühlten Kondensator 14 ohne den ersten Kühler 8 gebildet. Der Batteriekühlkreislauf 2 wird nach dem Umschalten für eine bestimmte Zeitspanne gebildet durch eine Serienschaltung aus dem Chiller 15, der Batteriekühlkreislauf Pumpe 4, dem Batterieventil 16, der Batterie-Bypassleitung 17, der Schaltvorrichtung 9 dem ersten Kühler 8, wieder der Schaltvorrichtung 9 und zurück zum Chiller 15. Auch im zweiten Betriebszustand kann der Motorkühlkreislauf 5 gleichzeitig zum Batteriekühlkreislauf 2 und fluidisch von diesem getrennt von Kühlmittel durchströmt werden.

Erfindungsgemäß wird zusammen mit dem Umschalten der Schaltvorrichtung 9 vom ersten Betriebszustand in den zweiten Betriebszustand eine Förderleistung der Batteriekreis-Pumpe 4 reduziert, um eine bessere Durchmischung und schnellere Abkühlung des Kühlmittels stromaufwärts der Antriebsbatterie 3 zu erreichen. Dabei wird kontinuierlich mittels des Temperatursensors 18 die Kühlmitteltemperatur überwacht und ab unterschreiten eines vorgegebenen Kühltemperatur-Schwellenwertes wieder eine Durchströmung der Antriebsbatterie 3 zugelassen, indem der Kühlmittelstrom durch Umschalten des Batterieventils 16 wieder durch die Antriebsbatterie 3 und nicht mehr durch die Batterie-Bypassleitung 17 geführt wird.

Darüber hinaus kann in einer temporären Anfangsphase, zusammen mit dem Umschalten der Schaltvorrichtung 9, eine Förderrichtung der Batteriekreis-Pumpe 4 umgekehrt werden, um das Kühlmittel, welches sich stromabwärts des ersten Kühlers 8 und stromaufwärts der Schaltvorrichtung 9 in den Leitungen befindet, zurück durch den ersten Kühler 8 zu fördern, um dieses Kühlmittel noch schneller abzukühlen. Spätestens wenn das sich in dem genannten Leitungsabschnitt befindliche Kühlmittel durch den ersten Kühler 8 gefördert wurde, kann die Förderrichtung der Batteriekreis-Pumpe 4 wieder zurück zur normalen Förderrichtung geschaltet werden.

Während die Erfindung detailliert in den Zeichnungen und der vorangehenden Beschreibung veranschaulicht und beschrieben wurde, ist diese Veranschaulichung und Beschreibung als beispielhaft und nicht als beschränkend zu verstehen und es ist nicht beabsichtigt die Erfindung auf das offenbarte Ausführungsbeispiel zu beschränken.

### Bezugszeichenliste

- 1: Kühlsystem
- 2: Batteriekühlkreislauf
- 3: Antriebsbatterie
- 4: Batteriekreis-Pumpe
- 5: Motorkühlkreislauf
- 6: Antriebsmaschine
- 7: Motorkreis-Pumpe
- 8: Erster Kühler
- 9: Schaltvorrichtung
- 10: Zu- und Ableitungen
- 11: Kondensatorstrang
- 12: Motorstrang
- 13: Zweiter Kühler
- 14: Kondensator
- 15: Chiller
- 16: Batterieventil
- 17: Batterie-Bypassleitung
- 18: Temperatursensor
- 19: Luftklappensteuerung
- 20: Gebläse

## Patentansprüche

1. Verfahren zum Steuern eines Kühlsystems (1) mit
einem Motorkühlkreislauf (5), in dem ein Antriebsmotor (6) und eine Motorkreis-Pumpe (7) kreislaufartig durchströmt werden, und
einem Batteriekühlkreislauf (2), in dem eine Batteriekreis-Pumpe (4) und eine Antriebsbatterie (3) und eine zur Antriebsbatterie (3) parallele Batterie-Bypassleitung (17) kreislaufartig durchströmt werden,
wobei in dem Verfahren
in einem ersten Betriebszustand ein erster Kühler (8) über eine Schaltvorrichtung (9) in den Motorkühlkreislauf (5) eingebunden ist,
wobei in dem ersten Betriebszustand der Motorkühlkreislauf (5) und der Batteriekühlkreislauf (2) fluidisch voneinander getrennt von Kühlmittel durchströmt werden, **dadurch gekennzeichnet, dass**
durch Betätigung der Schaltvorrichtung (9) in einen zweiten Betriebszustand geschaltet wird, in welchem von der Einbindung des ersten Kühlers (8) in den Motorkühlkreislauf (5) zu einer Einbindung des ersten Kühlers (8) in den Batteriekühlkreislauf (2) gewechselt wird und in welchem der Batteriekühlkreislauf (2), fluidisch vom Motorkühlkreislauf (5) getrennt, von Kühlmittel durchströmt wird, und
wobei zusammen mit der Betätigung der Schaltvorrichtung (9) eine Förderleistung der Batteriekreis-Pumpe (4) reduziert wird und das Kühlmittel an der Antriebsbatterie (3) vorbei durch die Batterie-Bypassleitung (17) geführt wird.

2. Verfahren gemäß Anspruch 1, wobei die Förderleistung der Batteriekreis-Pumpe (4) nach der Reduzierung mit abnehmender Kühlmitteltemperatur oder ab Unterschreitung eines Kühltemperatur-Schwellenwertes an einer Eingangsseite der Batterie-Bypassleitung (17) wieder erhöht wird.

3. Verfahren gemäß einem der vorhergehenden Ansprüche, wobei nach der Reduzierung der Förderleistung der Batteriekreis-Pumpe (4) mit Unterschreitung eines Kühltemperatur-Schwellenwertes des Kühlmittels an einer Eingangsseite der Batterie-Bypassleitung (17) eine Durchströmung der Antriebsbatterie (3) freigegeben wird.

4. Verfahren gemäß einem der vorhergehenden Ansprüche, wobei nach der Betätigung der Schaltvorrichtung (9) eine Förderrichtung der Batteriekreis-Pumpe (4) temporär umgekehrt wird, bis ein Kühlmittel, welches sich zum Umschaltzeitpunkt zwischen dem ersten Kühler (8) und der Schaltvorrichtung (9) befand, durch den ersten Kühler gefördert ist.

5. Verfahren gemäß einem der vorhergehenden Ansprüche, wobei in dem Batteriekreislauf (2) ferner ein Chiller (15) angeordnet ist.

6. Verfahren gemäß einem der vorhergehenden Ansprüche, wobei in dem Motorkühlkreislauf (5) ferner ein zweiter Kühler (13) angeordnet ist.

7. Verfahren gemäß einem der vorhergehenden Ansprüche, wobei es sich bei der Schaltvorrichtung (9) um ein 6/2-Wege-Ventil handelt.

8. Steuereinrichtung, welche angepasst ist, das Verfahren gemäß einem der Ansprüche 1 bis 7 auszuführen.

9. Kraftfahrzeug mit einer Steuereinrichtung gemäß Anspruch 8.

## Claims

1. Method for controlling a cooling system (1) comprising
a motor cooling circuit (5) in which a drive motor (6) and a motor circuit pump (7) are flowed through in a circuit-like manner, and
a battery cooling circuit (2) in which a battery circuit pump (4) and a drive battery (3) and a battery bypass line (17) parallel to the drive battery (3) are flowed through in a circuit-like manner,
wherein in the method
in a first operating state a first cooler (8) is integrated into the motor cooling circuit (5) via a switching device (9),
wherein in the first operating state the motor cooling circuit (5) and the battery cooling circuit (2) are flowed through by coolant in a fluidically separated manner from one another, **characterized in that**
by actuation of the switching device (9) a switch is made to a second operating state in which a change is made from the integration of the first cooler (8) into the motor cooling circuit (5) to an integration of the first cooler (8) into the battery cooling circuit (2) and in which the battery cooling circuit (2), fluidically separated from the motor cooling circuit (5), is flowed through by coolant, and
wherein together with the actuation of the switching device (9) a delivery capacity of the battery circuit pump (4) is reduced and the coolant is guided past the drive battery (3) through the battery bypass line (17).

2. Method according to claim 1, wherein the delivery capacity of the battery circuit pump (4) after the reduction is increased again with decreasing coolant temperature or upon falling below a cooling temperature threshold value at an input side of the battery bypass line (17).

3. Method according to one of the preceding claims, wherein after the reduction of the delivery capacity of the battery circuit pump (4), upon falling below a cooling temperature threshold value of the coolant at an input side of the battery bypass line (17), a flow through the drive battery (3) is enabled.

4. Method according to one of the preceding claims, wherein after the actuation of the switching device (9) a delivery direction of the battery circuit pump (4) is temporarily reversed until a coolant which was located between the first cooler (8) and the switching device (9) at the switching time has been conveyed through the first cooler.

5. Method according to one of the preceding claims, wherein in the battery circuit (2) a chiller (15) is furthermore arranged.

6. Method according to one of the preceding claims, wherein in the motor cooling circuit (5) a second cooler (13) is furthermore arranged.

7. Method according to one of the preceding claims, wherein the switching device (9) is a 6/2-way valve.

8. Control device which is adapted to carry out the method according to one of claims 1 to 7.

9. Motor vehicle with a control device according to claim 8.

## Revendications

1. Procédé pour commander un système de refroidissement (1) comprenant un circuit de refroidissement de moteur (5) dans lequel un moteur d'entraînement (6) et une pompe de circuit de moteur (7) sont traversés de manière circulaire, et
un circuit de refroidissement de batterie (2) dans lequel une pompe de circuit de batterie (4) et une batterie d'entraînement (3) et une conduite de dérivation de batterie (17) parallèle à la batterie d'entraînement (3) sont traversées de manière circulaire,
dans lequel procédé
dans un premier état de fonctionnement un premier refroidisseur (8) est intégré dans le circuit de refroidissement de moteur (5) par l'intermédiaire d'un dispositif de commutation (9),
dans lequel dans le premier état de fonctionnement le circuit de refroidissement de moteur (5) et le circuit de refroidissement de batterie (2) sont traversés par du liquide de refroidissement de manière fluidiquement séparée l'un de l'autre, **caractérisé en ce que**
par actionnement du dispositif de commutation (9) une commutation est effectuée vers un deuxième état de fonctionnement dans lequel un changement est effectué de l'intégration du premier refroidisseur (8) dans le circuit de refroidissement de moteur (5) à une intégration du premier refroidisseur (8) dans le circuit de refroidissement de batterie (2) et dans lequel le circuit de refroidissement de batterie (2), fluidiquement séparé du circuit de refroidissement de moteur (5), est traversé par du liquide de refroidissement, et
dans lequel conjointement avec l'actionnement du dispositif de commutation (9) une capacité de refoulement de la pompe de circuit de batterie (4) est réduite et le liquide de refroidissement est guidé en passant devant la batterie d'entraînement (3) à travers la conduite de dérivation de batterie (17).

2. Procédé selon la revendication 1, dans lequel la capacité de refoulement de la pompe de circuit de batterie (4) après la réduction est augmentée à nouveau avec une température de liquide de refroidissement décroissante ou lors du passage en-dessous d'une valeur seuil de température de refroidissement à un côté d'entrée de la conduite de dérivation de batterie (17).

3. Procédé selon l'une des revendications précédentes, dans lequel après la réduction de la capacité de refoulement de la pompe de circuit de batterie (4), lors du passage en-dessous d'une valeur seuil de température de refroidissement du liquide de refroidissement à un côté d'entrée de la conduite de dérivation de batterie (17), un écoulement à travers la batterie d'entraînement (3) est libéré.

4. Procédé selon l'une des revendications précédentes, dans lequel après l'actionnement du dispositif de commutation (9) une direction de refoulement de la pompe de circuit de batterie (4) est temporairement inversée jusqu'à ce qu'un liquide de refroidissement qui se trouvait entre le premier refroidisseur (8) et le dispositif de commutation (9) au moment de la commutation ait été refoulé à travers le premier refroidisseur.

5. Procédé selon l'une des revendications précédentes, dans lequel dans le circuit de batterie (2) un refroidisseur (15) est en outre disposé.

6. Procédé selon l'une des revendications précédentes, dans lequel dans le circuit de refroidissement de moteur (5) un deuxième refroidisseur (13) est en outre disposé.

7. Procédé selon l'une des revendications précédentes, dans lequel le dispositif de commutation (9) est une vanne 6/2 voies.

8. Dispositif de commande qui est adapté pour exécuter le procédé selon l'une des revendications 1 à 7.

9. Véhicule automobile avec un dispositif de commande selon la revendication 8.
